# EUROPÄISCHE PATENTANMELDUNG

(11) **EP 4 336 693 A1**
(43) Veröffentlichungstag der Anmeldung: **13.03.2024**
(21) Anmeldenummer: 23181222.3
(22) Anmeldetag: 23.06.2023
(51) Int. Cl.: H02J 3/14, H02J 3/38, H02J 13/00, B60L 53/63

(54) **VERFAHREN ZUM VERSORGEN EINER BAUSTELLE MIT ELEKTRISCHER ENERGIE SOWIE ENERGIEVERSORGUNGSSTATION FÜR DIE ELEKTRIFIZIERUNG VON BAUSTELLEN**

(30) Priorität: 14.07.2022 DE 102022117640
(71) Anmelder: Liebherr-Electronics and Drives GmbH, 88131 Lindau (DE)
(72) Erfinder: PFÄNDER, Mathias, 88437 Maselheim (DE); ZELL, Fabian, 88441 Mittelbiberach (DE); SUHM, Phillipp, 88400 Biberach (DE); SCHMITZ, Andre, 89077 Ulm (DE)
(74) Vertreter: Thoma, Michael

(57) **Zusammenfassung**

Die Erfindung betrifft ein Verfahren zum Versorgen einer Baustelle mit elektrischer Energie sowie eine Energieversorgungsstation zum Versorgen von Verbrauchern wie Baumaschinen, mit Speichermitteln zum Speichern elektrischer Energie, zumindest einem Verbraucheranschluss zum Laden und/oder Versorgen eines jeweiligen Verbrauchers mit Strom, einem Versorgungsanschluss zum Anschließen an eine Energieversorgungsquelle und Einspeisen von elektrischer Energie, sowie einer Leistungs- und/oder Energie-Steuereinrichtung zum Steuern des Einspeisens und/oder Speicherns und/oder Abgebens der elektrischen Energie. Erfindungsgemäß wird zwischen der Leistungs- und/oder Energiesteuereinrichtung und den angeschlossenen Verbrauchern bidirektional kommuniziert, wobei auf Basis von Informationen, die von den Verbrauchern übermittelt werden, von der Energieversorgungsstation der Energiebedarf geplant und die Beaufschlagung der Verbraucheranschlüsse in Abhängigkeit des geplanten Energiebedarfs gesteuert wird, und umgekehrt auf Basis des bestimmten Energiebedarfs und bestimmter Charakteristika der Energieversorgungsstation Steuerungsinformationen zum Steuern der Verbraucher an die angeschlossenen Verbraucher übermittelt werden.

## Beschreibung

Die vorliegende Erfindung betrifft ein Verfahren zum Versorgen einer Baustelle mit elektrischer Energie unter Verwendung einer Energieversorgungsstation. Die Erfindung betrifft ferner auch eine entsprechende Energieversorgungsstation zum Versorgen von Verbrauchern wie Baumaschinen mit elektrischer Energie, mit Speichermitteln zum Speichern elektrischer Energie, zumindest einem Verbraucheranschluss zum Laden und/oder Versorgen eines jeweiligen Verbrauchers wie einer Baumaschine mit Strom, zumindest einem Versorgungsanschluss zum Anschließen an eine Energieversorgungsquelle und Einspeisen von elektrischer Energie, sowie einer Leistungs- und/oder Energie-Steuereinrichtung zum Steuern des Einspeisens und/oder Speicherns und/oder Abgebens der elektrischen Energie durch die genannten Komponenten, Versorgungsanschluss, Speichermittel und Verbraucheranschluss.

Um Baustellen lokal emissionsfrei betreiben zu können, wird in jüngerer Zeit die Elektrifizierung von Baumaschinen vorangetrieben. Durch die Zunahme elektrifizierter Baumaschinen wie Bagger, Raupen, Betonmischer, Putzmaschinen, Erdbohrmaschinen oder Krane ist ein deutlich höherer elektrischer Energiebedarf auf der entsprechenden Baustelle zu erwarten, der gerade in innerstädtischen Bereichen nicht immer durch einen externen Netzanschluss zur Verfügung gestellt werden kann, zumindest bislang nicht und zumindest nicht ohne weiteren Ausbau des Versorgungsnetzes.

Die Problematik der Abdeckung eines temporär erhöhten Energiebedarfs stellt sich jedoch nicht nur auf innerstädtischen Baustellen, sondern auch auf jeglicher Art von Groß- und Kleinbaustellen und insbesondere auch in abgelegenen Gebieten ohne Zugang zur Energieversorgung, wie dies beispielsweise bei Baustellen im nicht urbanen Bereich, dem Seilbahnbau, dem Tunnelbau, dem Neubau auf einer grünen Wiese oder dem Bau von Aussiedlerhöfen der Fall ist. In ähnlicher Weise ist auch bei Veranstaltungsarenen bisweilen eine temporäre Unterstützung des Stromnetzes nötig oder eine Notstromversorgung bei kritischen Infrastrukturanlagen wie Krankenhäusern, IT-Serveranlagen oder Unter-/Übertagebaubetrieben erwünscht.

Bislang werden solche temporären Energieanforderungen oft mit Dieselgeneratoren abgedeckt, bei denen ein Dieselmotor einen Generator antreibt, um die benötigte elektrische Energie bereitzustellen. Dies eliminiert jedoch die lokale Emissionsfreiheit und ist darüber hinaus auch der erwünschten Lärm- und Geräuschpegelsenkung abträglich.

Für Großbaustellen oder andere große Infrastrukturmaßnahmen werden daher oft temporäre Versorgungsbauten errichtet, um den erhöhten Energiebedarf zu decken, beispielsweise durch Legen zusätzlicher Versorgungsleitungen oder kleinerer Kraftwerksbauten, was wenig wirtschaftlich ist und in abgelegenen Regionen wiederum selbst eine schwierige Maßnahme darstellt.

Es wurde daher bereits vorgeschlagen, mobile Energieversorgungsstationen mit emissionsfreien Energiequellen wie beispielsweise einer Brennstoffzelle oder mit großen Energiespeichern in Form von Lithium-Ionen-Batterien bereitzustellen, mithilfe derer eine vorhandene Netzversorgung unterstützt und temporäre Bedarfsspitzen abgefedert werden können.

Beispielsweise ist von der Firma Bredenoord unter der Bezeichnung "Big Battery Box" eine Containereinheit bekannt, die mit Lithiumionenbatterien, einer Leistungselektronik sowie einem Batteriemanagementsystem versehen ist, um Elektrizität aus Photovoltaik- und Windkraftanlagen speichern und zur Versorgung bereitstellen zu können.

Ferner ist von der Firma eCap Mobility unter der Produktbezeichnung "H2PowerPack" ein mobiles Kraftwerk auf Brennstoffzellenbasis bekannt, wobei die Brennstoffzelle zusammen mit Lithiumionenbatterien zum Zwischenspeichern von Energie in einem Container untergebracht ist, die auf einem trailerbaren Fahrwerk angeordnet ist.

Bei den vorbekannten Lösungen ist es schwierig, unterschiedlichen beschaffenen Verbrauchern gleichermaßen gerecht zu werden. Die auf einer Baustelle verwendeten Baumaschinen sind beispielsweise hinsichtlich ihres Energiebedarfs, zur Verfügung stehender Ladezeiten, ihrer Speicherkapazitäten und ihres Einsatzes regelmäßig sehr verschieden voneinander ausgebildet, so dass auch die Lade- bzw. Versorgungsaufgaben sehr unterschiedlich sind.

Hinzu kommt, dass auch der Leistungsbedarf innerhalb einer Maschine starken Schwankungen unterworfen ist, wobei dies nicht nur für den Vergleich zwischen Arbeitsbetrieb und Ruhephasen gilt, in denen die Maschine abgeschaltet bzw. nur zu laden ist, sondern auch den Arbeitsbetrieb alleine betrifft. Je nach Baumaschine können kurze, hohe Leistungsspitzen mit längeren Niedrigenergiephasen abwechseln oder blockweise Phasen relativ hohen Energiebedarfs mit Phasen niedrigerem Energiebedarf abwechseln. Betrachtet man beispielsweise einen Kran, treten beim Heben einer Last hohe Leistungsspitzen auf, während für lastfreie Kranbewegungen zum Positionieren des Hakens niedrige Leistungen benötigt werden.

Allerdings werden meistens nie alle Baumaschinen gleichzeitig und regelmäßig nie alle mit voller Leistung betrieben, so dass eine Energiestation überdimensioniert wäre, wenn für die Auslegung einfach nur alle Leistungsspitzen der anzuschließenden Baumaschinen aufsummiert werden würden.

Hiervon ausgehend liegt der vorliegenden Erfindung die Aufgabe zugrunde, eine verbesserte Energieversorgungsstation der genannten Art zu schaffen, die Nachteile des Stands der Technik vermeidet und letzteren in vorteilhafter Weise weiterbildet. Vorzugsweise soll eine flexibel einsetzbare, an unterschiedlich ausgebildete Verbraucher und verschieden beschaffene Energieversorgungsquellen anpassbare Energieversorgungsstation geschaffen werden, die autark arbeiten und bei der Elektrifizierung von Baustellen helfen kann. Insbesondere soll eine adäquate Versorgung aller Verbraucher ohne Überdimensionierung der Speichermittel der Energieversorgungsstation ermöglicht und gleichzeitig eine Überlastung der Versorgung oder gar Abschaltung vermieden werden. Zudem soll die Effizienz der Energieversorgung gesteigert werden.

Erfindungsgemäß wird die genannte Aufgabe durch ein Verfahren gemäß Anspruch 1 sowie eine Energieversorgungsstation gemäß Anspruch 8 gelöst. Bevorzugte Ausgestaltungen der Erfindung sind Gegenstand der abhängigen Ansprüche.

Es wird also vorgeschlagen, zwischen den Verbrauchern und der Energieversorgungsstation eine intelligente Kommunikation vorzusehen und darauf basierend ein Leistungsmanagement auszuführen, das die Verbraucher adäquat mit benötigter elektrischer Energie versorgt und andererseits eine Überlastung der Energieversorgungsstation auch bei schlanker Dimensionierung vermeidet. Erfindungsgemäß wird zwischen der Leistungs- und/oder Energiesteuereinrichtung der Energieversorgungsstation und den an den Verbraucheranschlüssen angeschlossenen Verbrauchern bidirektional kommuniziert, wobei auf Basis von Informationen, die von den Verbrauchern übermittelt werden, von der Energieversorgungsstation der Energiebedarf geplant und die Beaufschlagung der Verbraucheranschlüsse mit elektrischer Leistung und/oder Energie in Abhängigkeit des geplanten Energiebedarfs gesteuert wird, und umgekehrt auf Basis des bestimmten Energiebedarfs und bestimmter Charakteristika der Energieversorgungsstation Steuerungsinformationen zum Steuern der Verbraucher an die angeschlossenen Verbraucher übermittelt werden.

Durch die bidirektionale Kommunikation erfährt die Energieversorgungsstation, was die einzelnen angeschlossenen Verbraucher an elektrischer Leistung benötigen bzw. haben möchten, wodurch die Leistungs- und/oder Energiesteuereinrichtung der Energieversorgungsstation in die Lage versetzt wird, den gesamten Energiebedarf zu bestimmen und mit den Fähigkeiten der Energieversorgungsstation abzugleichen. Umgekehrt ermöglicht die bidirektionale Kommunikation den angeschlossenen Verbrauchern zu erfahren, was und wann die Energieversorgungsstation an elektrischer Leistung bereitzustellen vermag, so dass die Verbraucher ihren Betrieb an die Fähigkeiten der Energieversorgungsstation und auch aneinander anpassen können.

Beispielsweise können von der Leistungs- und/oder Energiesteuereinrichtung Steuerungsvorgaben über eine maximal zulässige Leistung an die angeschlossenen Verbraucher übermittelt werden. Die genannten Steuerungsvorgaben über die maximal zulässige Leistung können variabel angepasst werden, beispielsweise unter Berücksichtigung des geplanten, gesamten Energiebedarfs, der von der Energieversorgungsstation über die Versorgungsanschlüsse abgerufen werden soll, und/oder des Füllstands der Speichermittel der Energieversorgungsstation und/oder der über den Versorgungsanschluss einspeisbaren elektrischen Energiemenge. Die genannten Leistungsvorgaben können dabei zeitlich begrenzt und/oder für bestimmte Zeitfester festgelegt werden, in denen beispielsweise mehrere angeschlossene Verbraucher einen erhöhten Leistungsbedarf gleichzeitig angemeldet haben.

In Weiterbildung der Erfindung sind die Verbraucher, insbesondere deren Steuervorrichtungen wie beispielsweise eine Kransteuervorrichtung, dazu konfiguriert, ihren Maschinenbetrieb unter Berücksichtigung der übermittelten Leistungsvorgaben anzupassen, beispielsweise Hub- und/oder Verfahrgeschwindigkeiten zu begrenzen und/oder Arbeitsvorgänge mit erhöhtem Leistungsbedarf in Zeitfenster zu verschieben, die nicht mit Leistungsvorgaben belegt sind.

Umgekehrt können die angeschlossenen Verbraucher über die bidirektionale Kommunikation an die Energieversorgungsstation übermitteln, welche Energiemenge und/oder welche Leistung sie benötigen, wobei für diese gewünschten Energie- bzw. Leistungsmenge ggf. auch bestimmte Zeitdauern und/oder Zeitfenster angegeben werden können, beispielsweise dergestalt, dass ein Verbraucher eine bestimmte Leistung für zwei Stunden am nächsten Vormittag anfordert. Dies kann beispielsweise unter Berücksichtigung von Projektdaten automatisiert erfolgen, die der jeweilige Verbraucher aus beispielsweise einem Baustellenrechner oder einem sog. BIM abfragen kann. Solche Energieanforderungen bzw. -wünsche können ggf. auch manuell von einem Nutzer eingegeben und an die Leistungs- und/oder Energiesteuervorrichtung übermittelt werden, wobei alternativ oder zusätzlich ggf. auch eine direkte Übermittlung aus einem BIM-Server an die Leistungs- und/oder Energiesteuervorrichtung erfolgen kann.

Alternativ oder zusätzlich zu einer direkten Angabe von Leistungsanforderungen können von den Verbrauchern an die Energieversorgungsstation auch Daten übermittelt werden, aus denen die Energieanforderungen abgeleitet werden können oder sich mittelbar ergeben. Beispielsweise können Rüstzustände übermittelt werden, aus denen sich benötigte Leistungen ableiten lassen. Dies kann beispielsweise eine Ballastierung eines Krans sein, da sich aus einer hohen Ballastierung hohe Hublasten oder umgekehrt aus niedriger Ballastierung niedrigere Hublasten ableiten lassen.

Alternativ oder zusätzlich kann auch ein Gerätetyp bzw. eine Geräteidentifikation vom jeweiligen Verbraucher an die Energieversorgungsstation übermittelt werden, die dann ggf. unter Rückgriff auf eine Datenbank die benötigte oder angeforderte Energiemenge bestimmen kann.

Alternativ oder zusätzlich können Informationen über eine benötigte Leistung auch automatisiert durch Überwachung und Analyse eines Verbrauchsprofils ermittelt werden. Zeigt das Verbrauchsprofil beispielsweise einen zumindest näherungsweise konstanten Verbrauch, kann angenommen werden, dass es sich um einen Ladevorgang handelt, der keine Leistungsspitzen zeigen wird, während umgekehrt beim Auftreten von Leistungsspitzen auf einen Arbeitsbetrieb und ggf. auch auf eine bestimmte Maschine wie beispielsweise einen Kran geschlossen werden kann. Anhang dieser an die Leistungs- und/oder Energiesteuervorrichtung übermittelten Informationen kann letztere dann den Energiebedarf planen und/oder Maßnahme zur Beaufschlagung der Verbraucheranschlüsse bzw. des jeweiligen Verbraucheranschlusses ergreifen.

In Weiterbildung der Erfindung kann die Energieversorgungsstation ein Priorisierungsmodul aufweisen, das Teil der elektronischen Leistungs- und/oder Energiesteuereinrichtung sein kann, um einzelne oder mehrere angeschlossene Verbraucher auf Basis übermittelter Verbraucherinformationen zu priorisieren, wobei die Leistungs- und/oder Energiesteuereinrichtung dazu konfiguriert sein kann, die Beaufschlagung der Verbraucheranschlüsse der Energieversorgungsstation mit elektrischer Leistung und/oder Energie in Abhängigkeit der Priorisierung der daran angeschlossenen Verbraucher zu steuern. Beispielsweise kann Verbraucheranschlüssen, an denen höher priorisierte Verbraucher angeschlossen sind, eine höhere Energiemenge und/oder eine höhere Leistung bereitgestellt werden und/oder vorrangig mit elektrischer Energie versorgt werden, während umgekehrt Verbraucheranschlüsse, an denen niedriger priorisierte Verbraucher angeschlossen sind, nachrangig mit Energie versorgt und/oder mit einer begrenzten Leistung oder begrenzten bzw. kleineren Energiemenge versorgt werden können.

Beispielsweise kann das genannte Priorisierungsmodul zwischen einem Ladebetrieb eines angeschlossenen Verbrauchers und einem Arbeitsbetrieb eines angeschlossenen Verbrauchers unterscheiden bzw. die Priorisierung in Abhängigkeit von Lade- und Arbeitsbetrieb vornehmen, wobei die Informationen über Ladebetrieb und Arbeitsbetrieb von den angeschlossenen Verbrauchern her übermittelt werden können und/oder anhand eines bestimmten Leistungsprofils, das eine an einem jeweiligen Verbraucheranschluss abgegriffene Leistung charakterisiert, bestimmt werden können. Insbesondere kann an einem Versorgungsanschluss, an dem "nur" ein zu ladender Verbraucher angeschlossen ist, die bereitgestellte Leistung vorübergehen und/oder für den gesamten Ladevorgang reduziert werden. Alternativ oder zusätzlich kann an einem oder mehreren Versorgungsanschlüssen, an denen eine oder mehrere sich im Arbeitsbetrieb befindende Verbraucher angeschlossen sind, eine höhere Leistung und/oder Energiemenge erhalten.

Alternativ oder zusätzlich kann das Priorisierungsmodul dazu konfiguriert sein, Verbrauchertypen und/oder Arbeitsbetriebsphasen eines jeweils an einem Versorgungsanschluss angeschlossenen Verbrauchers berücksichtigen, beispielsweise dergestalt, dass für den Betrieb der Baustelle unverzichtbare Baumaschinen, deren Nichtbetrieb auch andere Arbeitsvorgänge auf der Baustelle lahmlegt oder verzögert, höher priorisiert werden. Alternativ oder zusätzlich kann die Priorisierung auch für eine bestimmte Arbeitsphase eines angeschlossenen Verbrauchers erhöht werden, wobei eine solche Arbeitsphase beispielsweise von dem jeweiligen Verbraucher angemeldet bzw. über die bidirektionale Kommunikationseinrichtung übermittelt werden kann. Hat beispielsweise ein Kran einen oder mehrere schwere Hübe auszuführen, kann der Kran eine Arbeitsphase erhöhten Energiebedarfs an die Energieversorgungsstation informatorisch übermitteln, woraufhin die Leistungs- und/oder Energiesteuereinrichtung den Versorgungsanschluss, an dem der Kran angeschlossen ist, auf ein erhöhtes Leistungsniveau setzen kann.

Alternativ oder zusätzlich kann die Leistungs- und/oder Energiesteuervorrichtung einen oder mehrere Energieversorgungsanschlüsse gemäß der Priorisierung der daran angeschlossenen Verbraucher ggf. auch absperren und/oder abschalten. Ist beispielsweise an einem Versorgungsanschluss ein Verbraucher angeschlossen, der Strom nur für einen Ladevorgang benötigt und dessen Ladevorgang auch zeitlich nicht kritisch ist, was beispielsweise über die Kommunikationsvorrichtung vom Verbraucher an die Energieversorgungsstation informatorisch übermittelt werden kann, kann dies beispielsweise mit einer Priorisierungsstufe "niedrig, zeitunkritisch" belegt werden, auf Basis derer dann der Versorgungsanschluss bei Bedarf abgeschaltet oder gesperrt werden kann, beispielsweise um an einem anderen Versorgungsanschluss eine höhere Energiemenge bzw. Leistung bereitstellen zu können.

Um effizient zu arbeiten und die zur Verfügung stehende Leistung bzw. Energiemenge ohne größere Abstriche an den Versorgungsanschlüssen für die tatsächlich bedürftigen Verbraucher bereitstellen zu können, kann die Leistungs- und/oder Energiesteuereinrichtung auch dazu konfiguriert sein, innerhalb der Energieversorgungsstation nicht benötigte Hardwarebausteine in einen Ruhemodus zu versetzen und/oder abzuschalten und erst wieder hochzufahren, wenn der ermittelte Energiebedarf dies tatsächlich erfordert. Beispielsweise können Frequenzumrichter in einem Speicher modular abgeschaltet werden. Alternativ oder zusätzlich können auch ganze Energiespeicher bei Parallelbetrieb abgeschaltet werden, wenn sie nicht benötigt werden.

Wird an einem Versorgungsanschluss, der von einem "schlafenden" oder abgeschalteten Hardwarebaustein versorgt wird bzw. einen solchen Hardwarebaustein benötigt, wieder Leistung benötigt oder eine höhere Leistung benötigt, was beispielsweise durch Übermitteln einer entsprechenden Information von dem daran angeschlossenen Verbraucher kommuniziert werden kann, wird von der Leistungs- und/oder Energiesteuervorrichtung der jeweilige Hardwarebaustein wieder hochgefahren.

Die bidirektionale Kommunikationseinrichtung kann grundsätzlich verschieden ausgebildet sein, wobei sie vorteilhafterweise so beschaffen ist, dass sie ohne zusätzliche Datenkabel zwischen Energieversorgungsstation und Verbrauchern auskommt. Vorteilhafterweise kann die bidirektionale Kommunikationseinrichtung ein Power-LAN-Modul bzw. ein Powerline-Modul aufweisen, das die Informationen zwischen Verbrauchern und Energieversorgungsstation über die Stromleitungen übertragen kann, mittels derer die elektrische Energie über die Verbraucheranschlüsse an die jeweils angeschlossenen Verbraucher geleitet wird. Durch eine solche Powerlinekommunikation werden separate Datenleitungskabel entbehrlich, wobei nichtsdestotrotz in alternativer Weiterbildung der Erfindung auch ein Netzwerkkabel bzw. ein Brustkabel oder ein anderes Datenkabel zwischen der Energieversorgungsstation und den Verbrauchern vorgesehen sein könnte.

In alternativer Weiterbildung der Erfindung kann die bidirektionale Kommunikationseinrichtung auch drahtlos arbeitend ausgebildet sein, beispielsweise ein Funkübermitteilungsmodul aufweisen. In Weiterbildung der Erfindung kann die Kommunikationseinrichtung ein WLAN-Modul und/oder ein Bluetooth-Modul aufweisen, um zwischen den angeschlossenen Verbrauchern und der Energieversorgungsstation zu kommunizieren.

Um verschiedenen Versorgungsanforderungen gerecht werden zu können, ist es vorteilhaft, die Speichermittel der Energieversorgungsstation zu diversifizieren, um verschiedenen Einspeise- und Abgabebedingungen gleichermaßen gerecht zu werden. Erfindungsgemäß umfassen die Speichermittel zum Speichern elektrischer Energie unterschiedlich ausgebildete Speicher mit verschiedenen Speichertechnologien, die von der Leistungs- und/oder Energiesteuereinrichtung in Abhängigkeit jeweils angeschlossener Verbraucher und/oder jeweils angeschlossener Energieversorgungsquellen gesteuert und/oder betrieben werden. Durch den Einsatz verschiedener Speichertechnologien kann die Energieversorgungsstation unterschiedlichen Lade- und/oder Versorgungsanforderungen verschiedener Baumaschinen oder anderer Verbraucher gerecht werden und an jeweils zur Verfügung stehende Energieversorgungsquellen angepasst werden.

Die unterschiedlich konfigurierten Speicher können in vorteilhafter Weiterbildung der Erfindung insbesondere einen Schnelllade- und/oder -Entladespeicher, der besonders schnell geladen und/oder entladen werden kann, sowie einen LangzeitSpeicher zum langfristigen Einspeichern elektrischer Energie umfassen. Durch solche, hinsichtlich der Lade-/Entladezeiten und/oder Speicherzeiten unterschiedlicher Speicher können einerseits Verbraucher versorgt und/oder geladen werden, die sehr kurzfristig hohe Energiemengen benötigen, während umgekehrt gleichzeitig durch den Langzeitspeicher über längere Zeit Versorger mit geringerem Energiebedarf versorgt werden können bzw. Energie über größere Zeitintervalle eingespeichert werden können.

Die Speicher können sich beispielsweise durch ihre spezifische Leistungsdichte und/oder ihre spezifische Energiedichte und/oder ihre Lade-/Entladezeiten voneinander unterscheiden, um den verschiedenen Anforderungen gerecht zu werden.

Insbesondere kann zumindest ein Kondensator beispielsweise in Form eines Doppelschichtkondensators als Speicher vorgesehen sein, um kurzfristig hohe Leistungsspitzen bedienen zu können und/oder kurzfristig hohe Ströme einspeichern zu können. Um andererseits auch größere Energiemengen bereitstellen und/oder über größere Zeit einspeichern und/oder abgeben zu können, kann in Weiterbildung der Erfindung auch zumindest ein Akkumulator und/oder eine Batterie beispielsweise in Form eines Lithium-Ionen-Akkus und/oder einer Lithium-Eisen-Batterie als Speicher vorgesehen sein. Hierdurch können über längere Zeit bestehende, höhere Leistungsbedürfnisse bzw. Energiemengen abgedeckt werden.

Um autark von lokal vielleicht nicht vorhandenen Netzanschlüssen zu sein, kann in Weiterbildung der Erfindung als Energieversorgungsquelle eine Brennstoffzelle bzw. eine Wasserstoff-/Brennstoffzelle vorgesehen sein, mithilfe derer beispielsweise eine Grundlast der Baustelle bzw. des Infrastrukturobjekts gedeckt werden kann. Die genannte Wasserstoff-/Brennstoffzelle kann an den genannten Versorgungsanschluss angeschlossen sein bzw. angeschlossen werden.

Alternativ oder zusätzlich kann über den genannten Versorgungsanschluss aber auch ein Versorgungsnetz, beispielsweise das öffentliche Stromnetz, angeschlossen werden.

Vorteilhafterweise besitzt die Energieversorgungsstation mehrere Versorgungsanschlüsse um verschieden ausgebildete Energieversorgungsquellen anschließen zu können, insbesondere eine Brennstoffzelle und das genannte Versorgungsnetz. Alternativ oder zusätzlich können auch mehrere Brennstoffzellen bzw. Wasserstoff-/Brennstoffzellen gleichzeitig über mehrere Versorgungsanschlüsse angebunden werden.

Die genannten Speichermittel und vorzugsweise auch die genannten Versorgungs- und Verbraucheranschlüsse können vorteilhafterweise mit einer Leistungselektronik bzw. leistungselektronischen Bauteilen verbunden sein, über die das Einspeisen und/oder Abgeben von Strom in die jeweiligen Komponenten gesteuert werden kann. Solche leistungselektronischen Bauteile können beispielsweise Umrichter wie Frequenzumrichter, Stromsteller wie DC/DC-Wandler oder DC/AC-Wandler oder AC/DC-Wandler umfassen, wobei aber auch andere leistungselektronische Bauelemente wie Transistoren, Leistungs-MOSFETs, Thyristoren oder IGBTs vorgesehen sein können, um das Laden und/oder Entladen der Speichermittel und/oder das Einspeisen und/oder Ausspeisen von Strom über die genannten Verbraucher und/oder Versorgungsanschlüsse zu steuern.

Insbesondere können bidirektionale DC/DC-Steller und/oder bidirektionale DC/AC-Steller vorgesehen sein, um das Ein- und Ausspeisen gleichermaßen bzw. den Stromfluss in entgegengesetzten Richtungen über das jeweilige Stromstellerbauteil steuern zu können.

Beispielsweise kann den genannten Speichern jeweils ein bidirektionaler DC/DC-Steller zugeordnet sein, durch den sowohl das Einspeichern als auch das Abgeben von Strom in den bzw. aus dem jeweiligen Speicher gesteuert werden kann.

Alternativ oder zusätzlich kann auch einem der genannten Verbraucher- und/oder Versorgungsanschlüsse ein solcher bidirektionaler DC/DC-Steller und/oder ein DC/AC-Steller zugeordnet sein, um die Stromflüsse von und zu einem Verbraucher bzw. von und zu einer Energieversorgungsquelle steuern zu können.

Vorteilhafterweise können die genannten Stromsteller bzw. -umformer untereinander vernetzt sein und/oder ein leistungselektronisches Netzwerk zwischen den Speichermitteln und den Verbraucher- bzw. Versorgungsanschlüssen bilden.

Um die Speichermittel intelligent einsetzen und die Verbraucher effizient mit Energie laden bzw. versorgen zu können, kann die genannte Leistungs- und/oder Energie-Steuereinrichtung vorteilhafterweise Energiebedarfs-Bestimmungsmittel umfassen, die den Energiebedarf der jeweils an die Energieversorgungsstation angeschlossenen Verbraucher bestimmen. Vorteilhafterweise sind die genannten Energiebedarfs-Bestimmungsmittel dazu ausgebildet, den individuellen Energiebedarf eines jeweils angeschlossenen Verbrauchers zu bestimmen, um die an dem jeweiligen Verbraucheranschluss bereitgestellte Energiemenge und/oder bereitgestellte Leistung individuell für den jeweils angeschlossenen Verbraucher optimal steuern zu können. Alternativ oder zusätzlich können die genannten Energiebedarfs-Bestimmungsmittel auch dazu ausgebildet sein, den gesamten Energiebedarf aller an die Energieversorgungsstation angeschlossenen Verbraucher zu bestimmen.

Vorteilhafterweise kann vorgesehen sein, dass eine Kommunikationseinrichtung zum Kommunizieren mit den zu versorgenden Verbrauchern vorgesehen, vorzugsweise drahtlos ausgebildet ist, wobei die Energiebedarfs-Bestimmungsmittel an die genannte Kommunkationseinrichtung angebunden und dazu ausgebildet ist, den Energiebedarf der angeschlossenen Verbraucher anhand der von den Verbrauchern über die Kommunikationseinrichtung empfangenen Daten zu bestimmen.

Weiter kann vorteilhafterweise vorgesehen sein, dass die Kommunikationseinrichtung dazu ausgebildet ist, Betriebsdaten, insbesondere Leistungs- und/oder Verbrauchsdaten, der Verbraucher abzufragen und den Energiebedarfs-Bestimmungsmitteln bereitzustellen, die anhand der empfangenen Betriebs-, insbesondere Leistungs- und/oder Verbrauchsdaten den Energiebedarf der angeschlossenen Verbraucher bestimmen.

In Abhängigkeit des bestimmten individuellen und/oder gesamten Energiebedarfs der angeschlossenen Verbraucher kann die Leistungs- und/oder Energiesteuereinrichtung den Betrieb der verschiedenen Speicher steuern, beispielsweise durch Ansteuern der zugeordneten leistungselektronischen Bauteile. Beispielsweise kann variabel festgelegt werden, aus welchem Speicher welche Energiemenge bzw. welche Leistung entnommen wird und auf welchen Verbraucheranschluss welche Energiemenge bzw. -leistung gegeben wird. Dabei kann ein jeweiliger Verbraucheranschluss Energie von nur einem Speicher beziehen oder auch von unterschiedlich ausgebildeten Speichern mit elektrischer Energie beaufschlagt werden.

Vorteilhafterweise sind die Speicher und/oder die leistungselektronischen Bauelemente miteinander und/oder mit der genannten Leistungs- und/oder Energiesteuereinrichtung vernetzt, insbesondere derart, dass Informationen bzw. Daten untereinander und/oder mit der genannten Leistungs- und/oder Energiesteuereinrichtung ausgetauscht werden können.

In Weiterbildung der Erfindung kann die genannte Leistungs- und/oder Energiesteuereinrichtung Verbraucher-Identifikationsmittel umfassen, um einen jeweils angeschlossenen Verbraucher identifizieren zu können. Beispielsweise können die genannten Verbraucher-Identifikationsmittel mit einer Sensorik an einem jeweiligen Verbraucheranschluss verbunden sein, mithilfe derer der am Verbraucheranschluss angeschlossene Verbraucher identifiziert werden kann. Alternativ oder zusätzlich kann auch eine Kommunikationsschnittstelle beispielsweise in Form eines RFID-Lesegeräts vorgesehen sein, um einen jeweiligen Verbraucher durch Einlesen eines RFID-Tags identifizieren zu können. Andere Identifikationsvarianten beispielsweise durch Einlesen einer Markierung können ebenfalls vorgesehen sein.

Alternativ oder zusätzlich können die Verbraucher-Identifikationsmittel einen jeweils angeschlossenen Verbraucher auch anhand sich einstellender Ladecharakteristika wie Ladestrom oder Ladewiderstand erkennen.

In Abhängigkeit des jeweils identifizierten Verbrauchers kann die Leistungs- und/oder Energiesteuereinrichtung dann die Beaufschlagung des jeweiligen Verbraucheranschlusses mit Strom von den Speichermitteln her und/oder von dem zumindest einen Versorgungsanschluss her zu steuern.

In vorteilhafter Weiterbildung der Erfindung kann die Leistungs- und/oder Energiesteuereinrichtung auch die jeweils an dem zumindest einen Versorgungsanschluss angeschlossene Energieversorgungsquelle und/oder einen Betriebsparameter der jeweils angeschlossenen Energieversorgungsquelle bei der Steuerung der weiteren Komponenten der Versorgungsstation berücksichtigen.

Vorteilhafterweise kann vorgesehen sein, dass die Leistungs- und/oder Energiesteuereinrichtung ein Planungsmodul zum vorausschauenden Planen des Energiebedarfs und/oder der Energiebereitstellung an dem zumindest einen Verbraucheranschluss aufweist, wobei das genannte Planungsmodul dazu ausgebildet ist, den Energiebedarf und/oder die Energiebereitstellung in Abhängigkeit von einem Einsatzplan für verschiedene Verbraucher und/oder einem Aufgabenplan für einen oder mehrere Verbraucher anzupassen.

Weiter kann vorteilhafterweise vorgesehen sein, dass das Planungsmodul über eine/die Kommunikationseinrichtung an einen Baustellenleitrechner und/oder die zu versorgenden Verbraucher angebunden und dazu ausgebildet ist, den genannten Einsatzplan und/oder Aufgabenplan aus dem Baustellenleitrechner und/oder den zu versorgenden Verbrauchern abzufragen.

Vorteilhafterweise kann die Leistungs- und/oder Energiesteuereinrichtung Energiequellen-Identifikationsmittel umfassen, um die jeweils angeschlossene Energiequelle zu identifizieren und/oder charakteristische Parameter hiervon zu ermitteln, um in Abhängigkeit hiervon weitere Komponenten der Versorgungsstation zu steuern.

Beispielsweise kann die Leistungs- und/oder Energiesteuereinrichtung dazu ausgebildet sein, den Strom aus einem Versorgungsnetz, das an einen Versorgungsanschluss angeschlossen ist, direkt zum Laden und/oder Versorgen eines Verbraucheranschlusses zu verwenden und ggf., wenn Leistung übrig ist, auch zum Laden der Speichermittel zu verwenden.

Andererseits kann ein von einer Wasserstoff-/Brennstoffzelle bezogener Strom beispielsweise vorrangig zum Laden der Speichermittel verwendet werden, da mit einer solchen Wasserstoff-/Brennstoffzelle vorteilhafterweise eine niedrigere Grundlast abgedeckt und insofern ein langsames Laden eines Speichers bewerkstelligt werden kann. Grundsätzlich sind aber auch andere, an die jeweils angeschlossene Energiequelle angepasste Steuerungsstrategien möglich, wobei die Leistungs- und/oder Energiesteuereinrichtung verschiedene Steuerungsstrategien für verschiedene, angeschlossene Energieversorgungsquellen bereitstellen kann.

Die Erfindung wird nachfolgend anhand eines bevorzugten Ausführungsbeispiels und zugehöriger Zeichnungen näher erläutert. In den Zeichnungen zeigen
- Fig. 1:: eine Darstellung einer Energieversorgungsstation und mehreren daran angeschlossenen Verbrauchern in Form von verschiedenen Baumaschinen gemäß einer vorteilhaften Ausführung der Erfindung, wobei die Verbraucher über eine Powerline Communication an die Energieversorgungsstation angebunden sind, um über die Energieversorgungsleitungen gleichzeitig Informationen bidirektional auszutauschen,
- Fig. 2:: den Aufbau einer Energieversorgungsstation nach einer vorteilhaften Ausführung der Erfindung zum Energieversorgen einer Baustelle und der dort verwendeten Baumaschinen, und
- Fig. 3:: eine Darstellung der Anbindung mehrerer Verbraucher an einen Speicher der Energieversorgungsstation nach einer vorteilhaften Ausführung der Erfindung.

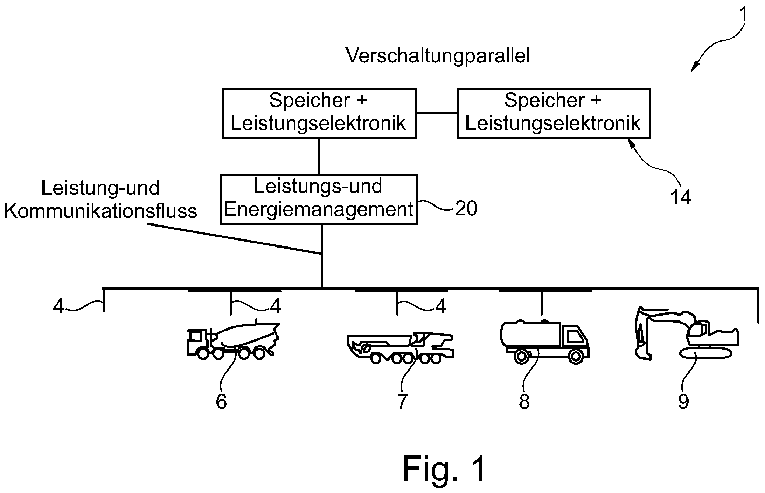

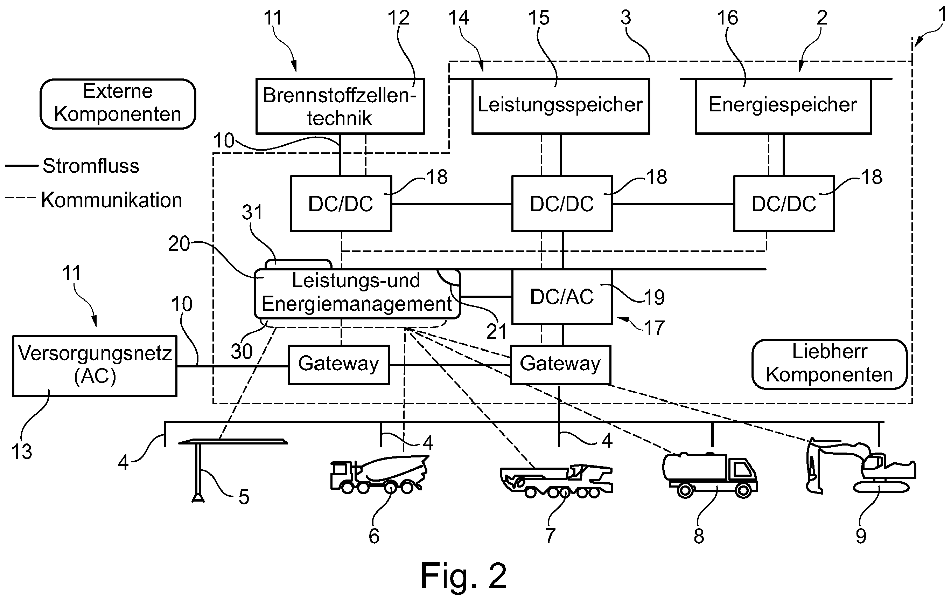

Die Energieversorgungsstation 1, vgl. Fig. 1 und Fig. 2, kann vorteilhafterweise eine mobile, von Baustelle zu Baustelle verbringbare Einheit bilden, die beispielsweise in Form eines Containers oder eines Fahrzeuganhängers ausgebildet sein kann. Beispielsweise kann die Energieversorgungsstation 1 ein Gehäuse 3 umfassen, das auf dem Fahrgestell eines Anhängers montiert sein kann oder als Frachtstück transportierbar sein kann.

Wie Fig. 1 und Fig. 2 zeigt, kann die Energieversorgungsstation 1 mehrere Verbraucheranschlüsse 4 aufweisen, an denen verschiedene Verbraucher, beispielsweise in Form von Baumaschinen und/oder Flurförderzeugen angeschlossen werden können, um geladen und/oder mit elektrischer Energie versorgt werden zu können. Beispielsweise kann die Energieversorgungsstation 1 dazu ausgebildet sein, verschiedene Baumaschinen wie beispielsweise einen Turmdrehkran 5, einen Betonmischer 6, einen Fahrzeugkran 7, einen Kipper 8 oder einen Raupenbagger 9 mit elektrischer Energie zu versorgen oder Akkus dieser Baumaschinen zu laden, die den Baumaschinen einen autarken elektrischen Betrieb ermöglichen können. Es versteht sich, dass natürlich auch noch andere Baumaschinen an einen der Verbraucheranschlüsse 4 angeschlossen werden können, um mit Energie versorgt bzw. geladen werden zu können.

Die Verbraucheranschlüsse 4 können dabei Ladeanschlüsse bilden, um Batterien oder Akkus der jeweils angeschlossenen Baumaschine zu laden. Alternativ oder zusätzlich können die Verbraucheranschlüsse 4 aber auch Arbeitsversorgungsanschlüsse bilden, um eine arbeitende Baumaschine direkt im Betrieb mit Energie zu versorgen, beispielsweise über ein ausreichend langes Versorgungskabel.

Wie Fig. 1 zeigt, können die Versorgungsleitungen, die über die Verbraucheranschlüsse 4 die elektrische Energie zu den Verbrauchern leiten, gleichzeitig auch der Kommunikation, insbesondere einer bidirektionalen Kommunikation dienen und Teil eines sog. Powerline Communication Moduls sein, das es erlaubt, der Energieversorgungsstation 1 mit den verschiedenen Verbrauchern 5-9 zu kommunizieren, ohne zusätzliche Datenübertragungsleitungen vorsehen zu müssen.

Wie Fig. 2 weiterhin zeigt, kann die Energieversorgungsstation 1 ferner mehrere Versorgungsanschlüsse 10 umfassen, um eine oder mehrere Energieversorgungsquellen 11 anschließen zu können, beispielsweise eine Wasserstoff-/Brennstoffzelle 12 und/oder ein Versorgungsnetz 13, das beispielsweise ein Teil des öffentlichen Stromnetzes sein kann.

Die genannten Versorgungsanschlüsse 10 können dementsprechend einen Netzanschluss und/oder einen Energiezellenanschluss bilden.

Die vorgenannte Verbraucheranschlüsse 4 und/oder die vorgenannten Versorgungsanschlüsse 13 können vorteilhafterweise von einer Außenseite der Energieversorgungsstation 1 her zugänglich angeordnet und/oder als lösbare Verbindungsanschlüsse ausgebildet sein, beispielsweise in Form von Steckanschlüssen, um einen jeweiligen Verbraucher 5, 6, 7, 8, 9 bzw. eine jeweilige Energiequelle 11 in einfacher Weise lösbar anschließen zu können.

Um die von den Energiequellen 11 herkommende Energie speichern zu können, umfasst die Energieversorgungsstation 1 Speichermittel 14, die in dem vorgenannten Gehäuse 3 aufgenommen sein können bzw. untergebracht sein können.

Die genannten Speichermittel 14 umfassen dabei vorteilhafterweise unterschiedlich konfigurierte Speicher 15, die unterschiedliche Speichereigenschaften aufweisen und unterschiedliche Speichertechnologien verwenden können. Insbesondere können die Speichermittel 14 einen Leistungsspeicher 15 einerseits und einen Energiespeicher 16 andererseits umfassen. Der genannte Leistungsspeicher 15 kann temporär sehr hohe Leistungen einspeichern und abgeben, während der Energiespeicher vorzugsweise hohe Energiemengen über längere Zeiten speichern kann.

Beispielsweise kann als Leistungsspeicher 15 ein schnell lad- und entladbarer Kondensator vorgesehen sein, beispielsweise in Form eines Doppelschichtkondensators, um kurzfristige Leistungsspitzen abdecken und ggf. auch kurzfristig anfallende, hohe Energiemengen einspeichern zu können. Solche kurzfristig rückfließenden, größeren Energiemengen können beispielsweise auftreten, wenn eine der angeschlossenen Baumaschinen in Betrieb, beispielsweise über ein Versorgungskabel, von der Energieversorgungsstation 1 her mit Energie versorgt wird und sozusagen von der Energieversorgungsstation her im Netzbetrieb versorgt wird.

Der genannte Energiespeicher 16 kann hingegen in Form einer Batterie oder eines Akkus ausgebildet sein, beispielsweise in Form eines Lithiumionenakkus oder einer anderen Batterieform, die hohe Energiemengen über längere Zeit speichern kann. Eine solche Batterie als Energiespeicher 16 kann einen größeren Energiebedarf über eine längere Zeit decken.

Während der Leistungsspeicher 15 sich durch eine sehr hohe spezifische Leistungsdichte auszeichnen kann, die beispielsweise um eine oder mehrere Zehnerpotenzen über der einer Batterie liegen kann, kann sich der Energiespeicher 11 durch eine sehr hohe spezifische Energiedichte auszeichnen, die um eine oder mehrere Zehnerpotenzen über der des Leistungsspeichers 15 liegen kann.

Zum Ein- und Ausspeisen des Stroms aus den Speichermitteln 14 und zur Versorgung der Verbraucheranschlüsse 4 mit Strom umfasst die Energieversorgungsstation 11 eine Leistungselektronik 17, die mehrere leistungselektronische Bauteile wie Stromumrichter, Stromsteller, Schaltelemente oder andere Bauelemente wie IG-PTs, Thyristoren oder Transistoren umfassen kann.

Insbesondere kann die Leistungselektronik 17 DC/DC-Wandler bzw. DC/DC-Steller umfassen, mithilfe derer der Stromfluss in die bzw. aus den Speichermitteln gesteuert werden kann. Beispielsweise ändert sich bei einem Doppelschichtkondensator die Spannung abhängig vom Füllzustand, was der DC/DC-Steller beim Einspeichern bzw. Entnehmen von Strom berücksichtigen kann. Solche DC/DC-Wandler bzw. DC/DC-Steller bezeichnen eine elektrische Schaltung, die eine am Eingang zugeführte Gleichspannung in eine Gleichspannung mit höherem, niedrigerem oder invertiertem Spannungsniveau umsetzen kann und in der Lage ist, Energie vom hohen Spannungspegel in den niedrigen Spannungspegel zu transferieren, beispielsweise um den jeweiligen Speicher zu laden, und ebenfalls in der anderen Richtung zu transferieren, d.h. zu entladen bzw. vom Speicher in den Gleichspanungskreis des Verbrauchersystems zu transferieren.

Die genannten DC/DC-Steller 18 sind vorteilhafterweise bidirektional arbeitend ausgebildet, um sowohl das Einspeichern als auch das Entnehmen von Strom in das bzw. aus dem jeweiligen Speicherelement steuern zu können.

Wie Fig. 2 zeigt, kann jedem der Speicher 15, 16 ein solcher DC/DC-Steller 18 zugeordnet sein bzw. vorgeschaltet sein. Auch dem Versorgungsanschluss 10, an dem die Wasserstoff-/Brennstoffzelle 12 angeschlossen ist, kann ein solcher DC/DC-Steller 18 zugeordnet bzw. vorgeschaltet sein, vgl. Fig. 2.

Ferner kann das System auch einen DC/AC-Steller 19 aufweisen, der den Verbraucheranschlüssen 4 vorgeschaltet sein kann und/oder dem Versorgungsanschluss 10 vorgeschaltet sein kann, an den das Versorgungsnetz 13 angeschlossen ist. Ein solcher DC/AC-Wandler bezeichnet eine elektrische Schaltung, die eine am Eingang zugeführte Gleichspannung in eine Wechselspannung mit höherem, niedrigerem, gleichem oder invertiertem Spannungsniveau umsetzen kann und in der Lage ist, Energie vom hohen Spannungspegel in den niedrigen Spannungspegel zu transferieren. Vorteilhafterweise kann auch dieser DC/AC-Steller bidirektional arbeitend ausgebildet sein, um auch eine Wechselspannung in der genannten Weise in eine Gleichspannung umsetzen zu können.

Wie Fig. 2 zeigt, werden die Bauelemente der Energieversorgungsstation 1 von einer übergeordneten Leistungs- und/oder Energiesteuereinrichtung 20 gesteuert und/oder geregelt, wobei die genannte Leistungs- und Energiesteuereinrichtung 20 insbesondere dazu ausgebildet ist, das Ein- und Ausspeisen von Strom in die bzw. aus den Speichern 15 und 16 zu steuern und/oder die Beaufschlagung der Verbraucheranschlüsse 4 mit Strom von den Speichermitteln 14 her und/oder einem der Versorgungsanschlüsse 10 her zu steuern und/oder das Einspeisen von Strom aus den Versorgungsanschlüssen 10 her zu steuern.

Wie Fig. 2 zeigt kann die genannte Leistungs- und/oder Energiesteuereinrichtung 19 mit den leistungselektronischen Bauteilen, insbesondere den genannten DC/DC-Stellern 18 und den DC/AC-Stellern 19 kommunizierend verbunden sein, um Stellbefehle übersenden und/oder Rückmeldungen empfangen zu können. Alternativ oder zusätzlich ist die genannte Leistungs- und/oder Energiesteuereinrichtung 20 auch kommunikativ mit den genannten Speichermitteln 14 verbunden und/oder kommunikativ mit der an den jeweiligen Versorgungsanschluss 10 angeschlossenen Energiequelle 11 kommunikativ verbunden, um Stellbefehle übertragen und/oder Rückmeldungen empfangen zu können.

Die Kommunikationseinrichtung 30 ist dabei bidirektional ausgebildet, um sowohl Informationen von der Energieversorgungsstation 1 an die verschiedenen Verbraucher 5-9 zu übertragen als auch umgekehrt Informationen von den genannten Verbrauchern 5-9 an die Energieversorgungsstation 1 zu übertragen. Wie erwähnt, kann die genannte bidirektionale Kommunikationseinrichtung 30 ein Powerline-Kommunikationsmodul umfassen, welches über die Stromleitungen, die an sich zur Energieversorgung dienen, eine Kommunikation ermöglicht. Alternativ oder zusätzlich können auch drahtlos arbeitende Kommunikationsmodule, insbesondere ein Funkmodul und/oder ein WLAN-Modul und/oder ein Bluetooth-Modul vorgesehen sein. Alternativ oder zusätzlich kommt auch eine Kommunikation über ein BUS- oder Netzwerk-Kabel in Betracht, das die Verbraucher mit der Energieversorgungsstation 1 und ggf. auch untereinander verbindet.

Die genannte Leistungs- und/oder Energiesteuereinrichtung 20 kann eine Datenverarbeitungseinrichtung beispielsweise umfassend einen Mikroprozessor, einen Programmspeicher und einen Arbeitsspeicher umfassen, um entsprechende Signale verarbeiten und Steuerroutinen abarbeiten zu können.

Insbesondere kann die genannte Leistungs- und/oder Energiesteuereinrichtung 20 Energiebedarfs-Bestimmungsmittel 21 umfassen, um den individuellen Energiebedarf des jeweils an einen Verbraucheranschluss 4 angeschlossenen Verbrauchers bestimmen zu können, um dann in Abhängigkeit des jeweils individuell bestimmten Energiebedarfs die Beaufschlagung des jeweiligen Verbraucheranschlusses 4 mit Energie hinsichtlich Leistung und/oder Energiemenge zu steuern.

Hierzu kann die genannte Steuereinrichtung 20 festlegen, welcher der Speicher 15 und 16 jeweils wieviel Leistung und/oder Energie bereitstellt bzw. am jeweiligen Verbraucheranschluss 10 bereitgestellt wird. Hierzu kann die Steuereinrichtung 20 die zuvor erläuterten Bauelemente der Energieversorgungsstation 1 in entsprechender Weise ansteuern.

Vorteilhafterweise zeichnet sich die Energieversorgungsstation 1 durch intelligente Steuerungsstrategien sowie ein effizientes Energiemanagement aus.

Die Energie- und Leistungssteuerung 20 übernimmt die Kommunikation, Daten aus unterschiedlichen (mehreren/ einzelnen) Baumaschinen 5 - 9 zu empfangen, zu verarbeiten und entsprechende Energie zum Laden der Baumaschinen 5 - 9 bedarfsgerecht zur Verfügung zu stellen. Die Kommunikation kann drahtlos oder über einen direkten Anschluss erfolgen.

Die Energie- und Leistungssteuerung 20 übernimmt die Aufgabe einer vorrauschauenden Planung an Energiebereitstellung für die unterschiedlichen Baumaschinen 5 - 9 und koordiniert den effizienten Energiefluss zwischen Speichermedium und Baumaschine 5 - 9 für den optimierten Ladeprozess hinsichtlich unterschiedlicher Parameter (bspw. Lebensdauer und Kosten) der Speichermedien.

Die Energie- und Leistungssteuerung 20 besitzt die Intelligenz automatisch zu erkennen, welche Baumaschine 5 - 9 zu welchem Zeitpunkt wie viel Energie benötigt und übernimmt die Planung und Koordination der unterschiedlichen Speichermedien zum Bereitstellen der Energie und Aufladen der Baumaschinen 5 - 9.

Die Energie- und Leistungssteuerung 20 optimiert die Stromflüsse auf Basis vorhergesagter Arbeitsprozesse der Baumaschinen 5 - 9 in Hinblick auf Strombezug über den Versorgungsanschluss und den Speicherzuständen der unterschiedlichen Speicher.

Die Energie- und Leistungssteuerung 20 besitzt eine dauerhafte (drahtlose) Kommunikation zu den unterschiedlichen Baumaschinen 5 - 9 zum Erkennen der entsprechenden Ladezustände. Die Energie und Leistungssteuerung besitzt eine externe Schnittstelle zum Abrufen unterschiedlicher Daten für die geplanten Arbeitsprozesse. Die Energie und Leistungssteuerung koordiniert auf Basis dieser Daten die Energieflüsse und das Bereitstellen der Energie für das Aufladen der unterschiedlichen Baumaschinen 5 - 9 und sorgt für einen energetisch optimierten Betrieb.

Beispielsweise können hierbei von der Leistungs- und/oder Energiesteuereinrichtung 20 Steuerungsvorgaben über eine maximal zulässige Leistung an die angeschlossenen Verbraucher übermittelt werden.

Alternativ oder zusätzlich können von der Leistungs- und/oder Energiesteuereinrichtung 20 an die angeschlossenen Verbraucher Zeitvorgaben für die Ausführung energieintensiver Arbeiten und/oder energiearmer Arbeiten übermittelt werden.

Die Umsetzung der Vorgaben kann dabei verbraucherseitig erfolgen, wobei die Vorgaben von den Verbrauchern ggf. auch abgeändert oder verweigert oder in anderer Weise umgearbeitet werden können, um sie mit dem Maschinentyp und/oder auszuführenden Arbeitsprozessen kompatibel zu machen. Vorteilhafterweise können dabei die an die Verbraucher übermittelten Steuerungs- und/oder Zeitvorgaben von elektronischen Steuereinrichtungen der Verbraucher 5-9 verarbeitet und zur Beeinflussung von Steuerbefehlen, die an Eingabemitteln der Verbraucher 5-9 eingegeben und/oder von Steuergeräten der Verbraucher 5-9 zur automatisierten Arbeitssteuerung generiert werden, verwendet werden, wobei insbesondere maximale Verfahrgeschwindigkeiten und/oder maximale Beschleunigungen von Arbeitsaggregaten steuerungsseitig reduziert und/oder automatisierte Arbeitszyklen zeitversetzt werden.

Ist bspw. eine Leistungsbeschränkung für einen Kran 5 aufgrund einer anstehenden Hubaufgabe nicht akzeptabel, kann die Steuerung des Krans 5 die Umsetzung verweigern und ggf. dies an die Leistungs- und/oder Energie-Steuervorrichtung 20 kommunizieren, woraufhin dann letztere die Vorgabe ggf. abändern und evtl. andere Verbraucheranschlüsse 4 bzw. daran angeschlossene Verbraucher stärker in der Leistung beschränken kann.

Alternativ oder zusätzlich können dabei einzelne oder mehrere angeschlossene Verbraucher 5-9 auf Basis übermittelter Informationen der Baumaschine von einem Priorisierungsmodul 40 priorisiert werden, wobei dann die Beaufschlagung der Verbraucheranschlüsse 4 mit elektrischer Leistung und/oder Energie in Abhängigkeit der Priorisierung der daran angeschlossenen Verbraucher 5 - 9 gesteuert wird, wobei insbesondere die Verteilung der Energie an die verschiedenen Verbraucheranschlüsse 4 auf Basis der Priorisierung variabel gesteuert wird.

Dabei können einzelne oder mehrere Verbraucheranschlüsse 4 gemäß Priorisierung der daran angeschlossenen Verbraucher 5-9 auch ganz gesperrt und/der abgeschaltet werden.

Das Priorisierungsmodul 40 kann die Priorisierung grundsätzlich in verschiedener Weise vornehmen. Bspw. können geeignete Bestimmungsmittel zum automatischen Bestimmen von Betriebszuständen vorgesehen sein, die zumindest einen Ladezustand und einen Arbeitsbetriebszustand der an den Verbraucheranschlüssen 4 angeschlossenen Verbraucher 5 - 9 bestimmen können, auf Basis dessen eine automatische Priorisierung vorgenommen werden kann.

Alternativ oder zusätzlich kann die Priorisierung auch manuell eingegeben werden, bspw. durch geeignete Eingabemittel zum manuellen Eingeben der Priorisierung eines oder mehrerer Verbraucher 5-9.

Die Priorisierung kann auch in Abhängigkeit eines identifizierten Verbrauchertyps oder -rüstzustands erfolgen.

Zur Identifizierung der angeschlossenen Verbraucher 5-9 können Verbraucher-Identifikationsmittel 22 zum Identifizieren der an die verschiedenen Verbraucheranschlüsse 4 angeschlossenen Verbraucher vorgesehen und dazu ausgebildet sein, in Abhängigkeit der identifizierten Verbraucher 5-9 zumindest eine der Komponenten Leistungselektronik, Versorgungsanschluss 10, Speichermittel 14 und Verbraucheranschluss 4 variabel zu steuern.

Die genannten Verbraucher-Identifikationsmittel 22 können die identifizierten Verbraucher auch dem genannten Priorisierungsmodul übermitteln.

Bspw. können die Verbraucher-Identifikationsmittel 22 eine Sensorik an zumindest einem Verbraucheranschluss 4 umfassen.

Alternativ oder zusätzlich können die genannten Verbraucher-Identifikationsmittel 22 auch dazu konfiguriert sein, den an einem Verbraucheranschluss 4 angeschlossenen Verbraucher 5 - 9 anhand von Informationen zu bestimmen, die von dem Verbraucher an die Energieversorgungsstation 1 übermittelt wurden.

Zur Identifizierung, welcher Verbraucher 5-9 an welcher Steckdose des Energiespeichers angeschlossen ist, können die genannten Verbraucher-Identifikationsmittel 22 auch dazu konfiguriert sein, folgendermaßen vorzugehen:
Das Leistungs-/Energie-Management kann auf Basis des Verbrauchsprofils selbstständig erkennen, welche Art von Verbraucher oder je nach Eindeutigkeit auch exakt welcher Verbraucher angeschlossen ist. Bspw. kann ein konstanter Verbrauch als zu einem Ladegerät eines E-Gerätes gehörig identifiziert werden. Alternative können auftretende Leistungsspitzen einen Kran identifizieren.

Hierzu können bspw. mit Hilfe von Messequipment das Lastprofil (u.a. über Spannungseinbruch, Strom, Stromspitze und/oder Frequenzänderung) eine Art der Verbrauchsmessung und/oder eine Auswertung in jeder Steckdose stattfinden, welche mit dem im Leistungs-/Energie-Management hinterlegten Profil abgeglichen wird.

Das Leistungs-/Energie-Management erkennt bspw. bei vorhandener Power Line Communication je Anschluss, welches Gerät je Anschluss eingesteckt ist, bspw. mittels einer Kennung. Hierzu könnte pro Anschluss eine Kommunikationseinrichtung vorgesehen werden.

Das Leistungs-/Energie-Management erkennt bspw. über eine Anschlussüberwachung, auf welchem Anschluss kürzlich ein Verbraucher eingesteckt/ausgesteckt wurde.

Alternativ kann am Leistungsmanagement (z.B. am Energiespeicher) der Verbraucher durch Eingabe eingestellt werden.

Um effizient zu arbeiten, kann die Energieversorgungsstation 1 aktuell für die Versorgung der Verbraucheranschlüsse mit elektrischer Leistung nicht benötigte Hardware-Bausteine wie bspw. die genannten Stromrichter oder DC/DC- oder DC/AC-Steller in einen Ruhemodus versetzen und/oder abschalten, um deren Standby-Verbrauch zu reduzieren. Wird die Funktion des in den Schlaf versetzten Bausteins wieder benötigt, kann dieser in Abhängigkeit des ermittelten Energiebedarfs wieder hochgefahren werden.

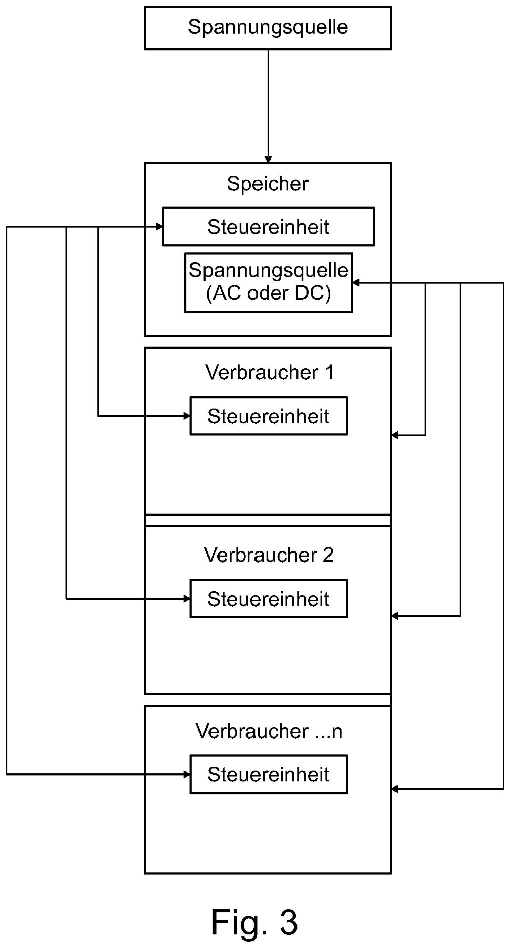

Wie Figur 3 zeigt, kann ein Speicher einen oder mehrere Verbraucher versorgen, per AC und/oder DC.

Der Speicher kann zum Laden an eine Spannungsquelle (DC oder AC) angeschlossen sein, kann aber auch im Inselbetrieb die/den Verbraucher 5-9 versorgen. Verbraucher und Speicher enthalten vorzugsweise jeweils eine eigene Steuereinheit 20, vgl. Figur 3.

Dabei kann eine bidirektionale Kommunikation zwischen der Steuereinheit 20 des jeweiligen Speichers und der jeweiligen Steuereinheit des Verbrauchers 5-9 stattfinden. Beispielsweise sendet die Steuereinheit des/der Verbraucher 5-9 Daten wie Wunsch-Leistung, Min.-Leistung, Max.-Leistung, Zustand (Standby, Laden, Arbeiten, ...), Maschinentyp, Ladeziel und/oder Ist-Leistung an die Steuereinheit 20 des Speichers.

Umgekehrt kann die Steuereinheit 20 des Speichers beispielsweise Daten wie freigegebene Leistung, Fehlerdaten, Diagnoseinformationen, Status (Ladezustand, Standby, Betriebsbereit, Ladezustandswarnung, ...), ... an den jeweiligen Verbraucher senden.

Auf Basis der ausgetauschten Informationen kann bspw. wie folgt vorgegangen werden:
1. Sammlung des Leistungsbedarfs der/des Verbraucher/s;
2. Leistungsmanagement bilanziert und gibt verbraucherindividuelle Leistung frei, wobei optional für nicht "intelligente" Verbraucher eine Leistungsreserve vorgehalten werden kann und/oder es können ein oder mehrere Anschlüsse gesperrt werden. Hierbei kann das Leistungsmanagement optimiert werden durch:
   - Priorisierung der Leistungsverteilung durch "Eingabe" oder generell für Maschinentypen, ggf. einstellbar;
   - Selbstoptimierung (ggf. "selbstlernend") mit definiertem Optimierungsziel abhängig von "Szenarien"
      o Arbeitender Verbraucher -> möglichst hoher Leistungsdurchsatz
      o Ladende Verbraucher mit geringerer Priorisierung;
3. Der/die Verbraucher setz/en die individuelle Leistungsbegrenzung um;
4. In längeren Phasen der Teillast könnten bestimmte Hardwareumfänge des Speichers in den Ruhemodus versetzt werden um die Effizienz zu steigern.

## Patentansprüche

1. Verfahren zum Versorgen einer Baustelle mit elektrischer Energie unter Verwendung einer Energieversorgungsstation, wobei verschiedene elektrisch betreibbare Baumaschinen (5-9) wie Kran, Bagger, Raupe oder Fahrmischer nacheinander und/oder gleichzeitig an die Verbraucheranschlüsse (4) der Energieversorgungsstation angeschlossen und von der Energieversorgungsstation (1) mit elektrischer Leistung und/oder Energie für den Betrieb geladen und/oder im Betrieb versorgt werden, **dadurch gekennzeichnet, dass** zwischen einer Leistungs- und/oder Energiesteuereinrichtung (20) der Energieversorgungsstation und den an den Verbraucheranschlüssen (4) angeschlossenen Baumaschinen (5-9) bidirektional kommuniziert wird, wobei auf Basis von Informationen, die von der Baumaschinenseite her kommen, von der Energieversorgungsstation der Energie- und/oder Leistungsbedarf geplant und/oder gesteuert wird und auf Basis des bestimmten Energie- und/oder Leistungsbedarfs und bestimmter Charakteristika der Energieversorgungsstation maximal zulässige Sollwertvorgaben zur Berücksichtigung durch die Baumaschinen an die angeschlossenen Baumaschinen übermittelt werden.

2. Verfahren nach dem vorhergehenden Anspruch, wobei von der Leistungs- und/oder Energiesteuereinrichtung (20) Steuerungsvorgaben umfassend maximal zulässige Sollwerte für Leistung, Energie, Strom, Verbrauch und/oder Auslastung an die angeschlossenen Verbraucher übermittelt werden.

3. Verfahren nach einem der vorhergehenden Ansprüche, wobei von der Leistungs- und/oder Energiesteuereinrichtung (20) an die angeschlossenen Verbraucher Zeitvorgaben für die Ausführung leistungs- und/oder energieintensiver Arbeiten und/oder leistungs- und/oder energiearmer Arbeiten übermittelt werden.

4. Verfahren nach einem der beiden vorhergehenden Ansprüche, wobei die an die Verbraucher übermittelten Steuerungs- und/oder Zeitvorgaben von elektronischen Steuereinrichtungen der Verbraucher (5-9) verarbeitet und zur Beeinflussung von Steuerbefehlen, die an Eingabemitteln der Verbraucher (5-9) eingegeben und/oder von Steuergeräten der Verbraucher (5-9) zur automatisierten Arbeitssteuerung generiert werden, verwendet werden, wobei insbesondere maximale Verfahrgeschwindigkeiten und/oder maximale Beschleunigungen von Arbeitsaggregaten steuerungsseitig reduziert und/oder automatisierte Arbeitszyklen zeitversetzt werden.

5. Verfahren nach einem der vorhergehenden Ansprüche, wobei einzelne oder mehrere angeschlossene Verbraucher (5-9) auf Basis übermittelter Informationen der Baumaschine von einem Priorisierungsmodul (40) priorisiert werden und in Abhängigkeit der Priorisierung die maximalen Sollwertvorgaben für die verschiedenen Verbraucher angepasst werden und/oder die Verteilung der Energie und/oder Leistung an die verschiedenen Verbraucheranschlüsse (4) auf Basis der Priorisierung variabel gesteuert wird, wobei vorzugsweise einzelne oder mehrere Verbraucheranschlüsse (4) gemäß Priorisierung der daran angeschlossenen Verbraucher (5-9) gesperrt und/oder abgeschaltet werden.

6. Verfahren nach einem der vorhergehenden Ansprüche, wobei für die Versorgung der Verbraucheranschlüsse mit elektrischer Leistung und/oder Energie nicht benötigte Hardware-Bausteine der Energieversorgungsstation in einen Ruhemodus versetzt und/oder abgeschaltet werden, und in Abhängigkeit des ermittelten Leistungs- und/oder Energiebedarfs wieder hochgefahren werden.

7. Energieversorgungsstation zum Versorgen von Verbrauchern wie Baumaschinen (5, 6, 7, 8, 9) mit elektrischer Leistung und/oder Energie, mit Speichermitteln (14) zum Speichern elektrischer Leistung und/oder Energie, mehreren Verbraucheranschlüssen (4) zum Laden und/oder Versorgen von Verbrauchern (5-9) wie Baumaschinen mit Strom, zumindest einem Versorgungsanschluss (10) zum Anschließen an eine Energieversorgungsquelle (11) und Einspeisen von elektrischer Leistung und/oder Energie, sowie einer Leistungs- und/oder Energie-Steuereinrichtung (20) zum Steuern des Einspeisens und/oder Speicherns und/oder Abgebens der elektrischen Leistung und/oder Energie durch die vorgenannten Komponenten Versorgungsanschluss (10), Speichermittel (14) und Verbraucheranschlüsse (4), **dadurch gekennzeichnet, dass** eine bidirektionale Kommunikationseinrichtung (30) zum bidirektionalen Kommunizieren zwischen der genannten Leistungs- und/oder Energiesteuereinrichtung (20) und den angeschlossenen Verbrauchern (5-9) vorgesehen ist, wobei die Leistungs- und/oder Energiesteuereinrichtung (20) Energiebedarfs-Bestimmungsmittel (21) zum Bestimmen des Leistungs- und/oder Energiebedarfs auf der Basis von Informationen, die von den Verbrauchern übermittelt wurden, sowie ein Steuerungsinformations-Modul zum Bereitstellen von Steuerungsinformationen an die angeschlossenen Verbraucher auf Basis des bestimmten Leistungs- und/oder Energiebedarfs und bestimmter Charakteristika der Energieversorgungsstation aufweist.

8. Energieversorgungsstation nach dem vorhergehenden Anspruch, wobei die bidirektionale Kommunikationseinrichtung (30) ein
- Powerline-Kommunikationsmodul zum Übertragen der Informationen zwischen der Leistungs- und/oder Energiesteuereinrichtung (20) und den angeschlossenen Verbrauchern über die Verbraucheranschlüsse (4) und die damit verbundenen Stromleitungen zum Versorgen der Verbraucher (5-9) mit elektrischer Leistung und/oder Energie, und oder
- ein drahtlos arbeitendes Kommunikationsmodul, insbesondere ein WLAN- und/oder Bluetooth-Modul, zum drahtlosen Übertragen der Informationen zwischen der Leistungs- und/oder Energiesteuereinrichtung (20) und den Verbrauchern (5-9)
aufweist.

9. Energieversorgungsstation nach einem der vorhergehenden Ansprüche 7 - 8, wobei die Leistungs- und/oder Energiesteuereinrichtung (20) ein Priorisierungsmodul (40) zum Priorisieren einzelner oder mehrerer angeschlossener Verbraucher (5-9) auf Basis übermittelter Informationen betreffend die Verbraucher (5-9) aufweist, wobei die Leistungs- und/oder Energiesteuervorrichtung (20) dazu konfiguriert ist, die maximalen Sollwertvorgaben für die angeschlossenen Verbraucher in Abhängigkeit der Priorisierung anzupassen und/oder die Verteilung der Leistung und/oder Energie an die Verbraucheranschlüsse (4)in Abhängigkeit der Priorisierung der daran angeschlossenen Verbraucher (5-9) zu steuern, wobei das Priorisierungsmodul (40) vorzugsweise
- Bestimmungsmittel zum automatischen Bestimmen von Betriebszuständen umfassend zumindest einen Ladezustand und einen Arbeitsbetriebszustand der an den Verbraucheranschlüssen (4) angeschlossenen Verbraucher und automatischen Priorisierung in Abhängigkeit des bestimmten Betriebszustands, und/oder
- Eingabemittel zum manuellen Eingeben der Priorisierung eines oder mehrerer Verbraucher (5-9)
aufweist.

10. Energieversorgungsstation nach einem der vorhergehenden Ansprüche 7 - 9, wobei die Energiebedarfs-Bestimmungsmittel (21) dazu konfiguriert sind, den Energiebedarf mehrerer Verbraucher, die an mehreren Verbraucheranschlüssen (4) angeschlossen sind, jeweils individuell zu bestimmen und die maximalen Sollwertvorgaben für die Verbraucher in Abhängigkeit des individuell bestimmten Energiebedarfs zu steuern und/oder die Verteilung der Leistung und/oder Energie an die Verbraucheranschlüsse (4) in Abhängigkeit des individuell bestimmten Energiebedarfs zu steuern.

11. Energieversorgungsstation nach einem der vorhergehenden Ansprüche 7 - 10, wobei die bidirektionale Kommunikationseinrichtung (30) dazu ausgebildet ist, Betriebsdaten, insbesondere Leistungs- und/oder Verbrauchsdaten, der Verbraucher abzufragen und den Energiebedarfs-Bestimmungsmitteln (21) bereitzustellen, die anhand der empfangenen Betriebs-, insbesondere Leistungs- und/oder Verbrauchsdaten, den Energiebedarf der angeschlossenen Verbraucher bestimmen.

12. Energieversorgungsstation nach einem der vorhergehenden Ansprüche 7 - 11, wobei die Leistungs- und/oder Energie-Steuereinrichtung (20) Verbraucher-Identifikationsmittel (22) zum Identifizieren eines jeweils an den zumindest einen Verbraucheranschluss (4) angeschlossenen Verbrauchers aufweist und dazu ausgebildet ist, in Abhängigkeit der identifizierten Verbraucher (5-9) zumindest eine der Komponenten Leistungselektronik, Versorgungsanschluss (10), Speichermittel (14) und Verbraucheranschluss (4) variabel zu steuern, wobei die genannten Verbraucher-Identifikationsmittel (22) vorzugsweise eine Sensorik an dem zumindest einen Verbraucheranschluss (4) umfassen und/oder dazu konfiguriert sind, den an einem Verbraucheranschluss (4) angeschlossenen Verbraucher (5 - 9) anhand von Informationen zu bestimmen, die von dem Verbraucher an die Energieversorgungsstation (1) übermittelt wurden.

13. Energieversorgungsstation nach einem der vorhergehenden Ansprüche 7 - 12, wobei die Leistungs- und/oder Energiesteuereinrichtung (20) Energiequellen-Identifikationsmittel (23) zum Identifizieren der jeweils an den zumindest einen Versorgungsanschluss (10) angeschlossenen Energiequelle (11) aufweist.

14. Energieversorgungsstation nach einem der vorhergehenden Ansprüche 7 - 12, wobei die Leistungs- und/oder Energiesteuereinrichtung (20) dazu konfiguriert ist, die Beaufschlagung des zumindest einen Verbraucheranschlusses (4) mit Strom von den Speichermitteln (14) her und von dem zumindest einen Versorgungsanschluss (10) her in Abhängigkeit von Informationen, die von den angeschlossenen Verbrauchern an die Leistungs- und/oder Energiesteuereinrichtung (20) übermittelt worden sind, und von Informationen, die von der Leistungs- und/oder Energiesteuereinrichtung (20) an die angeschlossenen Verbraucher übermittelt wurden, zu steuern.

15. Energieversorgungsstation nach einem der vorhergehenden Ansprüche 7 - 14, wobei die Leistungs- und/oder Energiesteuereinrichtung (20) ein Planungsmodul (31) zum vorausschauenden Planen des Leistungs- und/oder Energiebedarfs und/oder der Leistungs- und/oder Energiebereitstellung an dem zumindest einen Verbraucheranschluss (4) aufweist, wobei das genannte Planungsmodul (31) dazu ausgebildet ist, den Leistungs- und/oder Energiebedarf und/oder die Leistungs- und/oder Energiebereitstellung in Abhängigkeit von einem Einsatzplan für verschiedene Verbraucher und/oder einem Aufgabenplan für einen oder mehrere Verbraucher anzupassen, wobei das Planungsmodul (31) vorzugsweise über eine/die Kommunikationseinrichtung (30) an einen Baustellenleitrechner und/oder an die zu versorgenden Verbraucher angebunden und dazu ausgebildet ist, den genannten Einsatzplan und/oder Aufgabenplan aus dem Baustellenleitrechner und/oder den zu versorgenden Verbrauchern abzufragen.

16. Energieversorgungsstation nach einem der vorhergehenden Ansprüche 7 - 15, die als mobile Einheit ausgebildet ist, insbesondere auf einem Fahrwerk montiert ist und emissionsfrei und autark arbeitend ausgebildet ist.

17. Energieversorgungsstation nach einem der vorhergehenden Ansprüche, wobei die Speichermittel (14) unterschiedlich ausgebildete Speicher (15, 16) unterschiedlicher Speichertechnologien umfassen und die Leistungs- und/oder Energie-Steuereinrichtung (20) dazu ausgebildet ist, die unterschiedlichen Speicher (15, 16) individuell in Abhängigkeit angeschlossener Verbraucher und/oder angeschlossener Energieversorgungsquellen zu steuern, wobei die unterschiedlich ausgebildeten Speicher
- einen Leistungsspeicher (15) mit hoher Leistungsdichte einerseits und einen Energiespeicher (16) mit einer hohen Energiedichte,
- zumindest einen Schnelllade- und/oder -entladespeicher (15) zum schnellen Einspeichern und/oder Entladen hoher Ströme einerseits, und
- zumindest einen Langzeitspeicher (16) zum langfristigen Einspeichern hoher Energiemengen andererseits umfassen.

18. Energieversorgungsstation nach einem der vorhergehenden Ansprüche 7 - 17, wobei an zumindest einen Versorgungsanschluss (10) zumindest ein Versorgungsnetz (13) angeschlossen ist, wobei der genannte Versorgungsanschluss (10), an den das Versorgungsnetz (13) angeschlossen ist, an den Speichermitteln (14) vorbei mit zumindest einem der Verbraucheranschlüsse (4) verbindbar ist, wobei die Leistungs- und/oder Energie-Steuervorrichtung (20) dazu konfiguriert ist, die direkte Verbindung des Versorgungsanschlusses (10) mit einem oder mehreren Verbrauchern (5-9) an den Speichermitteln vorbei in Abhängigkeit der Informationen, die von den Verbrauchern (5 - 9) an die Energieversorgungsstation übermittelt wurden, zu steuern, insbesondere in Abhängigkeit eines angemeldeten Leistungsbedarfs und/oder -profils und/oder eines Zeitfensters hierfür.
